# EUROPEAN PATENT APPLICATION

(11) **EP 2 492 828 A1**
(43) Date of publication of application: **29.08.2012**
(21) Application number: 12156633.5
(22) Date of filing: 23.02.2012
(51) Int. Cl.: G06F 17/30

(54) **Method and apparatus for searching for data in content addressable memory**

(30) Priority: 23.02.2011 CN 201110042941
(71) Applicant: Huawei Technologies Co., Ltd., Longgang District, Shenzhen Guangdong 518129 (CN)
(72) Inventor: Ji, Bingwu, Shenzhen Guangdong 518129 (CN); Zhao, Tanfu, Shenzhen Guangdong 518129 (CN); Zhou, Yunming, Shenzhen Guangdong 518129 (CN); Li, Jiarong, Shenzhen Guangdong 518129 (CN); Lin, Wei, Shenzhen Guangdong 518129 (CN)
(74) Representative: Körber, Martin Hans

(57) **Abstract**

A method and an apparatus for searching for data in a memory, and a memory are provided. The memory includes at least two storage areas, each storage area includes at least two storage blocks, and storage blocks in each storage area are corresponding to each other. The method includes: determining whether a hit storage block that matches with data to be searched for exists in a current storage area; and if it is determined that the hit storage block exists, searching for a storage block corresponding to the hit storage block in a next storage area, so as to determine whether a hit storage block further exists. According to the method provided, when a storage block is hit, a storage block corresponding to the hit storage block is searched for in a next storage area, so that a storage block corresponding to a missed storage block may execute no operation, thus reducing power consumption.

## Description

### FIELD OF THE INVENTION

The present invention relates to the field of data storage, and in particular, to a method and an apparatus for searching for data in a memory, and a memory in the field of data storage.

### BACKGROUND OF THE INVENTION

A content addressable memory (Content Addressable Memory, CAM) and a ternary content addressable memory (ternary CAM, TCAM) are memories that are based on content searching and developed on the basis of a conventional memory. Currently, memories based on content searching are represented by the CAM and the TCAM, and are mainly configured to fast search for entries, such as an access control list and a routing table. Precise data searching may be implemented through the CAM, while through the TCAM, not only the precise data searching may be implemented, but also fuzzy data searching may be implemented.

Data searching refers to searching for data in a memory, where the data matches with data input from an input line (for example, a bit line) of data to be searched for. The memory performs a data matching operation, so as to determine whether the data input from the input line of the data to be searched for matches with data stored in the memory. It can be seen from upper layer application that, data to be searched for is content that is expected to search for, and the content is data stored in a memory according to a certain format. The upper layer application feeds the content that is expected to search for from an input line of the data to be searched for into the memory, so as to determine whether the content expected to search for exists in the memory. Therefore, in a certain sense, searching for data in a memory is searching for content in the memory by upper layer application.

In a CAM or TCAM, data to be searched for is input through a bit line, that is, a key word (KEY) line in the CAM or TCAM. If storage data corresponding to the data to be searched for is searched for and found in the CAM or TCAM, a signal indicating that the corresponding data is searched for and found is output through a matching line (ML line). In some application, the signal output by the ML line, which is used as an address, is output to memories connected behind the CAM or TCAM, such as a read only memory, a random access memory or a flash memory, and for obtaining data from these memories.

The CAM and the TCAM have advantages of fast searching speed and simple operation, but also have apparent disadvantages of large power consumption and high cost.

In the prior art, the TCAM is partitioned into several storage areas as required, and in the case that a previous storage area is mismatching, a next storage area performs no operation, thus saving reversal of a circuit and a connection line, and reducing the power consumption. However, in the case that the previous storage area is matching, the whole of the latter storage area performs an operation, and the power consumption is possibly further reduced. Particularly, when a scale of the TCAM is further increased, a requirement on the power consumption is further increased, and the whole storage area performs an operation, thus consuming more power.

### SUMMARY OF THE INVENTION

Embodiments of the present invention provide a method and an apparatus for searching for data in a memory, and a memory, so that a deficiency that the whole storage area needs to be searched for is overcome, and therefore, power consumption in a process of searching for data can be reduced.

In an aspect, an embodiment of the present invention provides a method for searching for data in a memory. The memory includes at least two storage areas, each storage area includes at least two storage blocks, and storage blocks in each storage area are corresponding to each other. The method includes: determining whether a hit storage block that matches with data to be searched for exists in a current storage area; and if it is determined that the hit storage block exists, searching for a storage block corresponding to the hit storage block in a next storage area, so as to determine whether a hit storage block further exists.

In another aspect, an embodiment of the present invention provides an apparatus for searching for data in a memory. The memory includes at least two storage areas, each storage area includes at least two storage blocks, and storage blocks in each storage area are corresponding to each other. The apparatus includes: a determining module, configured to determine whether a hit storage block that matches with data to be searched for exists in a current storage area; and a searching module, configured to search for a storage block corresponding to the hit storage block in a next storage area if the determining module determines that the hit storage block exists, so as to determine whether a hit storage block further exists.

In another aspect, an embodiment of the present invention provides a memory, which includes: at least two storage areas, where each storage area includes at least two storage blocks, and storage areas in each storage block are corresponding to each other; and the apparatus as described in the preceding, where the apparatus includes: a determining module, configured to determine whether a hit storage block that matches with data to be searched for exists in a current storage area; and a searching module, configured to search for a storage block corresponding to the hit storage block in a next storage area if the determining module determines that the hit storage block exists, so as to determine whether a hit storage block further exists.

In the embodiments of the present invention, a storage area is further partitioned into storage blocks, and in the case that a hit storage block exists in a current storage area, a storage block that is corresponding to the hit storage block is searched for in a next storage area, so that a storage block that is corresponding to a missed storage block may execute no operation, and therefore, power consumption may be reduced in the embodiments of the present invention.

### BRIEF DESCRIPTION OF THE DRAWINGS

In order to describe the technical solutions in embodiments of the present invention clearly, the accompanying drawings required for describing the embodiments are briefly introduced in the following. Evidently, the accompanying drawings in the following description are only some embodiments of the present invention, and those skilled in the art may also derive other drawings from these accompanying drawings without any creative effort.
FIG 1 is a schematic diagram of partitioning a memory according to an embodiment of the present invention;
FIG. 2 is a flowchart of a method for searching for data in a memory according to an embodiment of the present invention;
FIG. 3 is a flowchart of a method for searching for a storage block corresponding to a hit storage block in a next storage area according to an embodiment of the present invention;
FIG. 4 is a schematic diagram of an apparatus for searching for data in a memory according to an embodiment of the present invention;
FIG. 5 is another schematic diagram of an apparatus for searching for data in a memory according to an embodiment of the present invention;
FIG. 6 shows an example of a control circuit according to an embodiment of the present invention;
FIG. 7 is a schematic diagram of a memory according to an embodiment of the present invention; and
FIG. 8 is a further schematic diagram of a storage area shown in FIG. 7 according to an embodiment of the present invention.

### DETAILED DESCRIPTION OF THE EMBODIMENTS

The technical solutions in the embodiments of the present invention are clearly and fully described in the following with reference to the accompanying drawings in the embodiments of the present invention. Evidently, the embodiments to be described are only a part of rather than all of the embodiments of the present invention. Based on the embodiments of the present invention, all other embodiments obtained by persons skilled in the art without creative efforts shall fall within the protection scope of the present invention.

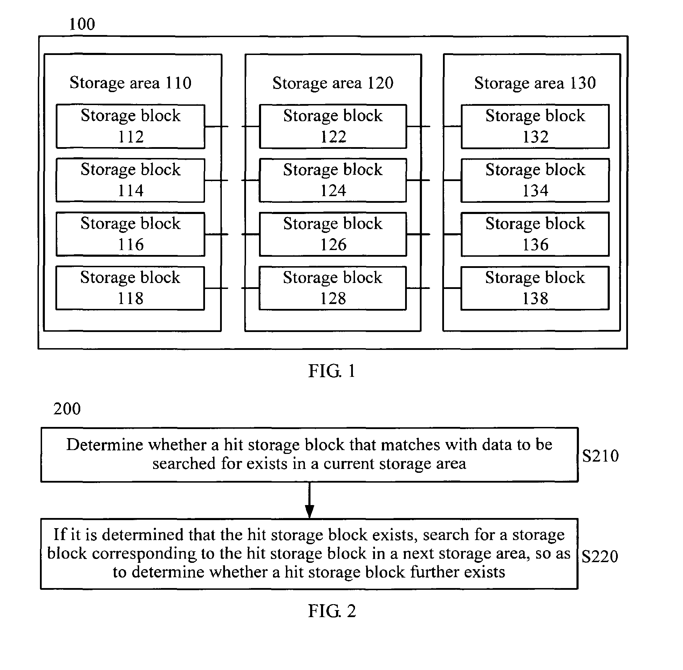

First with reference to FIG. 1, a schematic diagram of partitioning a memory according to an embodiment of the present invention is described.

The memory may be partitioned, so that the memory includes at least two storage areas, each storage area includes at least two storage blocks, and storage blocks in each storage area are corresponding to each other. Taking FIG. 1 as an example, in FIG. 1, a memory 100 includes a first storage area 110, a second storage area 120, and a third storage area 130. The first storage area 110 includes a first storage block 112, a second storage block 114, a third storage block 116, and a fourth storage block 118. The second storage area 120 includes a fifth storage block 122, a sixth storage block 124, a seventh storage block 126, and an eighth storage block 128. The third storage area 130 includes a ninth storage block 132, a tenth storage block 134, an eleventh storage block 136, and a twelfth storage block 138.

The storage blocks in the three storage areas are corresponding to each other. That is, the first storage block 112, the fifth storage block 122, and the ninth storage block 132 are corresponding to each other; the second storage block 114, the sixth storage block 124, and the tenth storage block 134 are corresponding to each other; the third storage block 116, the seventh storage block 126, and the eleventh storage block 136 are corresponding to each other; and the fourth storage block 118, the eighth storage block 128, and the twelfth storage block 138 are corresponding to each other. Data stored in the memory is stored in the same row in a corresponding storage block, so that the same row in the corresponding storage block stores each part of the data respectively. For example, "1100" in data 110010100011 is stored in a third row of the first storage block 112 in the first storage area 110, "1010" is stored in a third row of the fifth storage block 122 in the second storage area 120, and "0011" is stored in a third row of the ninth storage block 132 in the third storage area 130.

A storage area and a storage block may be partitioned according to a performance demand, a load size, a power consumption requirement and a searching speed. The memory may be partitioned into at least two storage areas along a column direction, such as a direction of a bit line or KEY line. Each storage area may include the same number or different numbers of bit lines or KEY lines. Each storage area of the memory may be partitioned into at least two storage blocks along a row direction, such as a direction of a word line or ML line. Corresponding storage blocks have the same number of rows. Storage blocks in the same storage area may have the same number or different numbers of word lines or ML lines.

In the following, based on a memory including at least two storage areas, where each storage area includes at least two storage blocks, a method for searching for data according to an embodiment of the present invention is described.

FIG. 2 shows a method 200 for searching for data in a memory according to an embodiment of the present invention.

The method 200 includes: in S210, determine whether a hit storage block that matches with data to be searched for exists in a current storage area; and in S220, if determining that the hit storage block exists, search for a storage block corresponding to the hit storage block in a next storage area, so as to determine whether a hit storage block further exists.

In S210, the data to be searched for is input from an input line (for example, a bit line or a KEY line) of the data to be searched for of the current storage area, to determine whether a hit storage block that matches with the input data exists in the current storage area. A storage block hit indicates that in the case that the storage block performs a data matching operation, data that matches with the data input from the input line of the data to be searched for is found in the storage block. In S220, if the hit storage block exists in the current storage area, a storage block corresponding to the hit storage block is searched for in a next storage area, so that a storage block to be searched for performs a data matching operation according to the data to be searched for, where the data to be searched for is input from the input line of the data to be searched for of the storage area, thus determining whether a hit storage block further exists in the next storage area.

According to the method for searching for data provided by this embodiment of the present invention, a storage area is further partitioned into storage blocks, and if a hit storage block exists in a current storage area, a storage block corresponding to the hit storage block is searched for in a next storage area, so that a storage block corresponding to a missed storage block may execute no operation, and therefore, power consumption may be reduced. In the prior art, if matching data is searched for and found in the current storage area, that is, the current storage area is hit, the whole next storage area needs to be searched; however, in this embodiment of the present invention, only a part of the storage blocks in the next storage area may be searched for, so that a storage block performing no operation may exist, and therefore, an effect of reducing power consumption can be achieved.

In an embodiment of the present invention, in S210, determine whether a hit storage block that matches with data to be searched for exists in a current storage area.

A storage block in a storage area, in the case that a data matching operation is performed, receives data to be searched for, where the data to be searched for is input from a corresponding bit line or KEY line. If the data to be searched for is found in the storage block, the storage block is hit, and otherwise, the storage block is missed.

In S220, if it is determined that the hit storage block exists, search for a storage block corresponding to the hit storage block in a next storage area, so as to determine whether a hit storage block further exists.

if in S210, it is determined that the hit storage block exists, the storage block corresponding to the hit storage block in the next storage area performs a data matching operation, determine whether a hit storage block further exists in the next storage area, that is, determine whether data to be searched for is further found in the storage block that performs the data matching operation, and if the data to be searched for is found, a corresponding storage block is hit.

According to an embodiment of the present invention, in S220, only a storage block corresponding to a hit storage block in a next storage area may be searched for.

For example, if the storage block 112 in the storage area 110 is hit, only the storage block 122 in the storage area 120 is searched for. If both the storage block 116 and the storage block 118 in the storage area 110 are hit, only the storage block 126 and the storage block 128 in the storage area 120 is searched for.

Only a storage block corresponding to a hit storage block is searched for, so that a storage block corresponding to a missed storage block may perform no operation, and therefore, power consumption can be maximally saved.

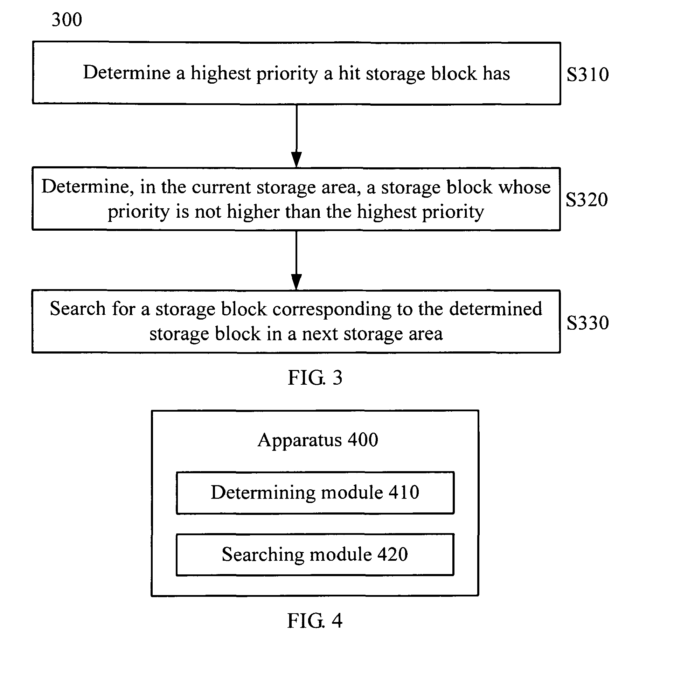

According to an embodiment of the present invention, a storage block corresponding to a hit storage block in a next storage area may be searched for through a method 300 shown in FIG. 3.

In S310, determine a highest priority that a hit storage block has.

Storage blocks in a storage area may have different priorities. According to an embodiment of the present invention, a priority may be allocated to each storage block according to a predetermined priority allocation rule. For example, in a storage area, priorities of storage blocks may be sequentially decreased. With reference to FIG. 1, when priorities are allocated according to a sequence in which priorities are sequentially decreased, a priority of the storage block 112 in the storage area 110 is higher than a priority of the storage block 114, the priority of the storage block 114 is higher than a priority of the storage block 116, and the priority of the storage block 116 is higher than a priority of the storage block 118. Definitely, priorities may also be allocated to storage blocks in other manners, such as a manner in which priorities are sequentially increased, and a manner in which priorities are first increased and then decreased.

Therefore, the highest priority that the hit storage block has may be determined according to the predetermined priority allocation rule. For example, if the storage blocks 114, 116 and 118 in the storage area 110 are all hit, and the priority of the storage block 116 among that of the storage blocks 114, 116 and 118 is the highest, it is determined that the highest priority at this time is the priority of the storage block 116.

If the predetermined priority allocation rule is that priorities of storage blocks are sequentially decreased, the highest priority that the hit storage block has may be determined according to an allocation rule that priorities of storage blocks are sequentially decreased in each storage area. For example, if the storage blocks 114, 116 and 118 in the storage area 110 are all hit, since priorities are sequentially decreased, it is determined that the priority of the storage block 114 is the highest.

In S320, determine a storage block whose priority is not higher than the highest priority in a current storage area.

After the highest priority is determined in S310, a storage block whose priority is not higher than the highest priority may be determined. For example, it is assumed that priorities of the storage blocks 112, 114, 116 and 118 in the storage area 110 are sequentially decreased, and if only the storage block 116 is hit, the storage blocks 116 and 118 are determined according to a priority order. If the storage blocks 114 and 118 are both hit, the highest priority at this time is the priority of the storage block 114, and the storage blocks 114, 116 and 118 are determined according to the priority order.

In S330, search for a storage block corresponding to the determined storage block in a next storage area.

Because a corresponding relation exists between storage blocks in a storage area, a storage block corresponding to the storage block that is determined through S320 may be searched for. For example, if storage blocks determined in S320 are the storage blocks 116 and 118, the storage blocks 126 and 128 in the next storage area 120 are searched for. If the storage blocks determined in S320 are the storage blocks 112 and 116, the storage blocks 122 and 126 in the next storage area 120 are searched for. If the storage block determined in S320 is the storage block 118, only the storage block 118 in the next storage area 120 is searched for.

In the embodiment of FIG. 3, a corresponding storage block is searched for based on a priority of the storage block. By setting a priority, limitations, such as a wiring range, a wiring area and a wiring manner in a current memory can be adapted to, so as to effectively control an operation of a corresponding storage block, and a current memory structure is influenced slightly, so that a wiring manner of an existing memory is not influenced, and a chip area occupied by the memory is also not increased. Although storage blocks corresponding to some missed storage blocks may also be enabled to perform an data matching operation, compared with the prior art, power consumption is not increased, but power consumption of a circuit that is corresponding to a storage block cannot be decreased. However, in most cases, the storage block corresponding to the missed storage block performs no data matching operation, and compared with the prior art, a corresponding circuit originally performing a data matching operation does not perform an operation anymore, so that power consumption can be decreased. Therefore, on the whole, based on the method provided in this embodiment of the present invention, power consumption of searching for data in a memory can be reduced.

In this embodiment of the present invention, if more than two storage areas exist in a memory, in the method shown in FIG. 2, if it is determined that in S220, a hit storage block further exists and a next storage area further exists, continue to search for a next storage area of the storage area; if no hit storage block exists after S220 is executed, no matter whether a next storage area further exists, data searching is stopped. Searching is performed through the method 200, until data that matches with data to be searched for is found or data that matches with the data to be searched for is not found in the memory.

The memory 100 in FIG. 1 is taken as an example. If the storage block 116 in the storage area 110 is hit, the storage block 126 in the storage area 120 needs to be searched for. If the storage block 126 is also hit, continue to search for the storage block 136 in the storage area 130 to determine whether the storage block 136 is also hit. If no storage block in the storage area 120 is hit, searching is stopped.

According to the method for searching for data provided in this embodiment of the present invention, based on a memory with a partitioned structure, in the case that a storage block is hit, a storage block corresponding to the hit storage block in a next storage area is searched for, so that some storage blocks may perform no data matching operation at the same time when searching performance is not changed, and therefore, power consumption can be reduced. Furthermore, because a priority is used to further control an operation of a corresponding storage block, so as to adapt to a limitation of design conditions, such as a wiring trend and a wiring region, and an existing memory chip is influenced slightly, so that encapsulation, heat dissipation and component reliability are all benefited at the same when power consumption is reduced.

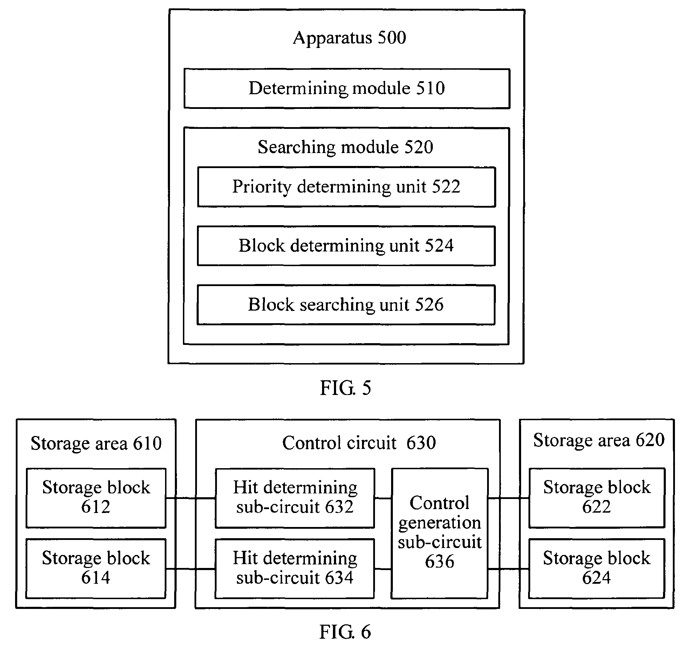

An apparatus for searching for data in a memory according to an embodiment of the present invention is described in the following with reference to FIG. 4 and FIG. 5.

FIG. 4 shows an apparatus 400 for searching for data in a memory according to an embodiment of the present invention.

The memory may include at least two storage areas, each storage area includes at least two storage blocks, and storage blocks in each storage area are corresponding to each other. Based on this memory, the apparatus 400 may include a determining module 410 and a searching module 420. The determining module 410 may be configured to determine whether a hit storage block that matches with data to be searched for exists in a current storage area. The searching module 420 may be configured to search for a storage block corresponding to the hit storage block in a next storage area if the determining module 410 determines that the hit storage block exists, so as to determine whether a hit storage block further exists.

The preceding and other operations and/or functions of the memory, the determining module 410 and the searching module 420 may make reference to corresponding parts in the preceding memory 100 and the method 200 and/or 300 for searching for data, and are not repeated here in order to avoid repetition.

According to the apparatus for searching for data in a memory provided in this embodiment of the present invention, based on a memory with a partitioned structure, in the case that the determining module determines that a storage block is hit, the searching module may search for a storage block corresponding to the hit storage block in a next storage area, so that some storage blocks may perform no data matching operation at the same time when searching performance is not changed, and therefore, power consumption can be reduced.

FIG. 5 is a schematic diagram of an apparatus 500 for searching for data in a memory according to an embodiment of the present invention.

A determining module 510 and a searching module 520 of the apparatus 500 are basically the same as the determining module 410 and the searching module 420 of the apparatus 400 in FIG. 4.

According to an embodiment of the present invention, the searching module 520 may be configured to search for only a storage block corresponding to a hit storage block in a next storage area if the determining module 510 determines that the hit storage block exists, so as to determine whether a hit storage block further exists.

According to an embodiment of the present invention, the searching module 520 may include a priority determining unit 522, a block determining unit 524, and a block searching unit 526. The priority determining unit 522 may be configured to determine a highest priority the hit storage block has. The block determining unit 524 may be configured to determine a storage block whose priority is not higher than the highest priority in a current storage area. The block searching unit 526 may be configured to search for, in a next storage area, a storage block corresponding to the storage block that is determined by the block determining unit 524.

According to an embodiment of the present invention, the priority determining unit 522 may be configured to determine, according to a predetermined priority allocation rule, a highest priority the hit storage block has. Furthermore, the priority determining unit 522 may be configured to determine, according to an allocation rule that priorities of storage blocks are sequentially decreased in each storage area, the highest priority the hit storage block has.

The preceding and other operations and/or functions of the searching module 520, the priority determining unit 522, the block determining unit 524, and the block searching unit 526 may make reference to corresponding parts in the preceding method 200 and/or 300 for searching for data, and are not repeated here in order to avoid repetition.

The searching module searches for only a storage block corresponding to the hit storage block, so that storage blocks corresponding to a missed storage block may all perform no operation, therefore, power consumption can be maximally saved.

Through the priority determining unit, the block determining unit, and the block searching unit, a corresponding storage block may be searched for based on a priority of the storage block. By setting a priority, limitations, such as a wiring range, a wiring area and a wiring manner in a current memory can be adapted to, so as to effectively control an operation of a corresponding storage block, and a current memory structure is influenced slightly, so that a wiring manner of an existing memory is not influenced, and an area occupied by the memory is also not increased. Although storage blocks corresponding to some missed storage blocks may also be enabled to perform a data matching operation, compared with the prior art, power consumption is not increased, but power consumption of a circuit that is corresponding to the storage block cannot be decreased. However, in most cases, the storage block corresponding to the missed storage block performs no data matching operation, and compared with the prior art, a corresponding circuit originally performing a data matching operation does not perform an operation anymore, so that power consumption can be decreased. Therefore, on the whole, based on the apparatus provided in this embodiment of the present invention, power consumption of searching for data in a memory can be reduced. Furthermore, because a priority is used to further control an operation of a corresponding storage block, so as to adapt to a limitation of design conditions, such as a wiring trend and a wiring region, and an existing memory chip is influenced slightly, so that package, encapsulation, heat dissipation and component reliability are all benefited at the same time when power consumption is reduced.

According to an embodiment of the present invention, the determining module 510 and the searching module 520 may include at least one control circuit. Functions of the determining module 510 and the searching module 520 are implemented through the control circuit.

Each control circuit may be connected between two adjacent storage areas, and may be configured to: determine whether a hit storage block that matches with data to be searched for exists in a former storage area of the two adjacent storage areas, and control a storage block corresponding to the hit storage block in a latter storage area of the two adjacent storage areas to perform a data matching operation if it is determined that the hit storage block exists.

An example of the control circuit is shown in FIG. 6. FIG 6 is only schematic, and does not limit the protection scope of the present invention.

FIG. 6 shows a control circuit 630, and the control circuit is connected between storage areas 610 and 620. In FIG. 6, the storage area 610 includes storage blocks 612 and 614, and the storage area 620 includes storage blocks 622 and 624.

According to an embodiment of the present invention, the control circuit may include: at least two hit determining sub-circuits, corresponding to a storage area in a former storage block, and configured to: determine whether a corresponding storage block is hit; and a control generation sub-circuit, configured to: if a hit determining sub-circuit determine that the corresponding storage block is hit, control a storage block corresponding to the hit storage block in a latter storage area to perform a data matching operation.

With reference to FIG. 6, the control circuit 630 includes hit determining sub-circuits 632 and 634, which are respectively corresponding to the storage block 612 and the storage block 614 of the storage area 610. If data to be searched for is found in the storage block 612, the hit determining sub-circuit 632 determines that the storage block 612 is hit, and otherwise, determines that the storage block 612 is missed. In the same way, if the data to be searched for is found in the storage block 614, the hit determining sub-circuit 634 determines that the storage block 614 is hit, and otherwise, determines that the storage block 614 is missed.

The control circuit 630 further includes a control generation sub-circuit 636. The control generation sub-circuit 636 receives outputs from the hit determining sub-circuits 632 and 634, and if these outputs indicate that a storage block is hit, the control generation sub-circuit 630 controls a corresponding storage block in the storage area 620 to perform an operation. For example, if the output of the hit determining sub-circuit 632 indicates a hit, the control generation sub-circuit 630 controls the storage block 622 to perform an operation. In the same way, if the output of the hit determining sub-circuit 634 indicates a hit, the control generation sub-circuit 630 controls the storage block 624 to perform an operation.

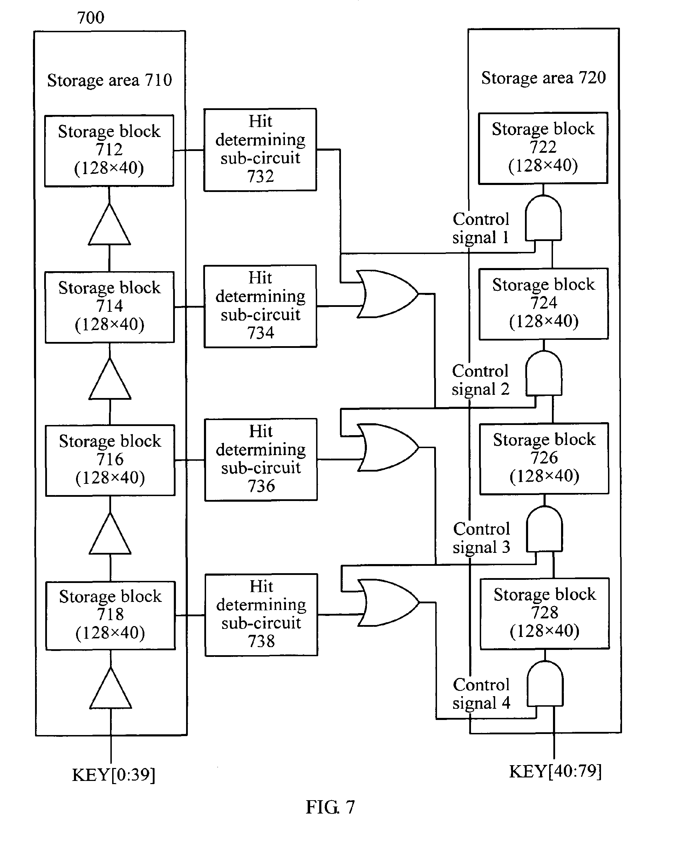

According to an embodiment of the present invention, the control generation sub-circuit 636 may include an OR gate and an AND gate, where the OR gate is configured to determine a priority of a storage block, and the AND gate is configured to receive data input from an input line of data to be searched for and an output from the OR gate, so as to control whether the received data is input to a storage block. An example of the control generation sub-circuit according to an embodiment of the present invention is described in the following with reference to FIG. 7.

In FIG. 7, a control generation sub-circuit includes an OR gate and an AND gate. In addition, FIG. 7 further shows storage areas and hit determining sub-circuits. A storage area 710 includes storage blocks 712, 714, 716 and 718, and a storage area 720 includes storage blocks 722, 724, 726 and 728. Hit determining sub-circuits 732, 734, 736 and 738 are respectively corresponding to the storage blocks 712, 714, 716 and 718.

A priority of a storage block may be determined through the OR gate. In FIG. 7, when a storage block at a high position is hit, no matter whether a storage block at a low position is hit, an output of the OR gate is a high level. It is indicated that a hit result of a storage block at a high position shields a hit result of a storage block at a low position, and it means that a storage block at a higher position has a higher priority. In this example, the storage block 712 has the highest priority in the storage area 710.

AND gates corresponding to the storage blocks 724, 726 and 728 receive data input from an input line of data to be searched for and an output from the OR gate (which are respectively control signals 2, 3 and 4). An AND gate corresponding to the storage block 722 receives the data input from the input line of the data to be searched for and an output from the hit determining sub-circuit 732 (a control signal 1). Although the AND gate corresponding to the storage block 722 does not receive the output from the OR gate, persons skilled in the art may easily conceive that, the hit determining sub-circuit 632 may be connected to an OR gate, where an input of an end of the OR gate is a constant low level, so that the AND gate corresponding to the storage block 722 also receives the output from the OR gate.

When the other end of the AND gate except an input end that receives the data to be searched for is a high level, the AND gate is opened, the data input from the input line of the data to be searched for is fed into a corresponding storage block. When the other end is a low level, the AND gate is closed, the data input from the input line of the data to be searched for cannot enter the corresponding storage block. In this way, the corresponding storage block performs no data matching operation. Therefore, it can be seen that, whether the AND gate is opened, whether the data is fed, and whether the storage block performs an operation are all controlled by the hit determining sub-circuit and the OR gate.

Through effectively design and wiring, a simple element structure may be used to implement a control circuit, so that the control circuit introduced according to this embodiment of the present invention almost occupies no area, and the wiring may satisfy limitations of a hardware condition and a chip resource, so as not to influence a structure and wiring of an existing memory chip. According to the implementation of the control circuit in this embodiment of the present invention, encapsulation, heat dissipation and component reliability are all benefited at the same time when power consumption is reduced.

According to an embodiment of the present invention, a memory may include: at least two storage areas, where each storage area includes at least two storage blocks, and storage blocks in each storage area are corresponding to each other; and the apparatus described in the preceding. The memory according to this embodiment of the present invention may be a CAM, may also be a TCAM, and may further be another memory in which a data matching operation may be performed.

Next, still with reference to FIG. 7, an example of the memory according to this embodiment of the present invention is described.

In FIG. 7, it is assumed that a memory 700 has a 512×80 storage array, whose depth is 512 rows, and whose bit width is 80 bits. The storage array of the memory 700 is partitioned into two storage areas 710 and 720, and a bit width of each storage area is 40 bits. Each storage area is partitioned into four storage blocks, and a size of each storage block is 128×40.

As the storage area is partitioned, taking a KEY line as an example, an input line of data to be searched for is correspondingly partitioned into two groups, a KEY[0:39]input storage area 710, and a KEY[40:79]input storage area 720.

In the storage area 710, a buffer may be set for the storage blocks 712, 714, 716 and 718 to increase drive capability of the KEY line. Definitely, the buffer may not be set. The storage blocks 712 to 718 perform a data matching operation, and when data that matches with data to be searched for is found, where the data to be searched for is input from the KEY[0:39], a corresponding hit determining sub-circuit outputs a signal indicating a hit. For example, when matching data is found in the storage block 712, the hit determining sub-circuit 732 outputs a signal indicating a hit. In the same way, if the matching data is found in the storage block 714, 716 or 718, their respective corresponding hit determining sub-circuit 734, 736 or 738 outputs a signal indicating a hit (for example, a high level). Otherwise, if no matching data is found in the storage blocks, the corresponding hit detection sub-circuit outputs a signal indicating missed (for example, a low level).

In the storage area 720, the KEY[40:79] is input into the storage blocks 722, 724, 726 and 728 through an AND gate. The other input end of the AND gate is controlled by a front circuit, and receives control signals 1, 2, 3 and 4 output in the front respectively. If the other input end of the AND gate is a high level, the AND gate is closed, the KEY[40:79] may be fed into a corresponding storage block, and the corresponding storage block performs a data matching operation. If the other input end of the AND gate is a low level, the AND gate is closed, the KEY[40:79] cannot be fed into the corresponding storage block.

Based on control of a hit determining sub-circuit, an OR gate and an AND gate, when the storage block 718 is hit and the storage blocks 712, 714 and 716 are all missed, the storage block 728 performs an operation according to data input from the KEY[40:79], and the storage blocks 722, 724 and 726 all perform no operation, thus saving operations of three storage blocks, so that power consumption is reduced. When the storage block 716 is hit and the storage blocks 712 and 714 are both missed, no matter whether the storage block 718 is hit, the storage blocks 726 and 728 perform an operation according to the data input from the KEY[40:79], and the storage blocks 722 and 724 perform no operation, thus saving operations of two storage blocks, so that power consumption is reduced. When the storage block 714 is hit and the storage block 712 is missed, no matter whether the storage blocks 716 and 718 are hit, the storage blocks 724, 726 and 728 all perform an operation according to the data input from the KEY[40:79], and the storage block 722 performs no operation, thus saving an operation of one storage block, so that power consumption is reduced. When the storage block 712 is hit, no matter whether the storage blocks 714, 716 and 718 are hit, the storage blocks 722 to 728 all perform an operation according to the data input from the KEY[40:79], and at this time, although all storage blocks perform an operation, compared with the prior art, no more power is consumed. Therefore, on the whole, power consumption can be saved when data is searched for in the memory 700 by using this manner.

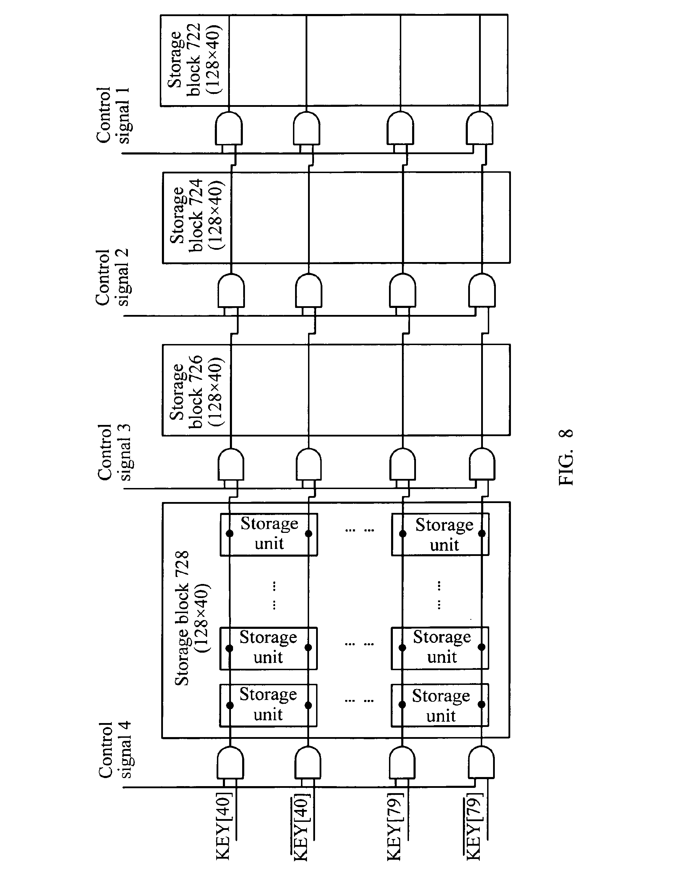

FIG. 8 is a schematic diagram of a further structure of the storage area 720 in FIG. 7.

A storage unit in each storage block of the storage area 720 may adopt an existing structure that receives inverting input and non-inverting input of data. In addition to receiving data of a KEY line, an AND gate further needs to receive a control signal 1, 2, 3 or 4, thus controlling whether the data of the KEY line is fed into a storage unit of a storage block.

Persons skilled in the art may realize that, each method step and unit described in the embodiments disclosed in this specification can be implemented by electronic hardware, computer software, or a combination of the electronic hardware and the computer software. To clearly describe interchangeability of hardware and software, steps and components in each embodiment have been described in the preceding descriptions generally according to functions. Whether these functions are executed by hardware or software depends upon particular application and design constraint conditions of the technical solutions. Persons skilled in the art may implement the described functions for each particular application by using different manners, but this implementation should not be interpreted as a departure from the scope of the present invention.

The steps of the method described with reference to the embodiments disclosed by this specification may be performed by using hardware, a software program executed by a processor, or a combination of the hardware and the software program executed by the processor. The software program may be disposed in a Random Access Memory (RAM), a flash memory, a Read-Only Memory (ROM), an electrically programmable ROM, an electrically erasable programmable ROM, a register, a hard disk, a removable disk, a CD-ROM, or any other forms of storage mediums known in the art.

Although some embodiments of the present invention are shown and described, persons skilled in the art should understand that, various modifications may be performed on these embodiments without departing from the principle of the present invention, and these modifications should fall within the scope of the present invention.

## Claims

1. A method for searching for data in a memory, wherein the memory comprises at least two storage areas, each storage area comprises at least two storage blocks, and each storage block in a current storage area has a corresponding storage block in a next storage area, and the method comprises:
determining whether a hit storage block exists in the current storage area, wherein the hit storage block comprises data which matches with the data to be searched for;
if the hit storage block exists, searching the corresponding storage block of the hit storage block in the next storage area, for data which matches with the data to be searched for.

2. The method according to claim 1, wherein the searching the corresponding storage block of the hit storage block in the next storage area should be:
only searching the corresponding storage block of the hit storage block in the next storage area.

3. The method according to claim 1, wherein the searching the corresponding storage block of the hit storage block in the next storage area comprises:
determining a priority of the hit storage block;
determining a low-priority storage block whose priority is not higher than the priority of the hit storage block; and
searching the corresponding storage block of the hit storage block and corresponding storage block of the low-priority storage block for data which matches the data to be searched for.

4. The method according to claim 3, wherein the priority of the hit storage block is the highest priority of the hit storage block has..

5. An apparatus for searching for data in a memory, wherein the memory comprises at least two storage areas, each storage area comprises at least two storage blocks, and each storage block in a current storage area has a corresponding storage block in a next storage area, and the apparatus comprises:
a determining module, configured to determine whether a hit storage block exists in the current storage area, wherein the hit storage block comprises data which matches with the data to be searched for; and
a searching module, configured to search the corresponding storage block of the hit storage block in the next storage area, for data which matches with the data to be searched for, when the the hit storage block exists.

6. The apparatus according to claim 5, wherein the searching module is configured to only search the corresponding storage block of the hit storage block in the next storage area, for data which matches with the data to be searched for, when the the hit storage block exists.

7. The apparatus according to claim 5, wherein the searching module comprises:
a priority determining unit, configured to determine a priority of the hit storage block;
a block determining unit, configured to determine a low-priority storage block whose priority is not higher than the priority of the hit storage block; and
a block searching unit, configured to search the corresponding storage block of the hit storage block and corresponding storage block of the low-priority storage block for data which matches the data to be searched for.

8. The apparatus according to claim 7, wherein the priority of the hit storage block is the highest priority of the hit storage block has.

9. The apparatus according to claim 5, wherein the determining module and the searching module comprise at least one control circuit, wherein each control circuit is connected between two adjacent storage areas, and is configured to determine whether a hit storage block that matches data to be searched for exists in a former storage area of the two adjacent storage areas, and control a storage block corresponding to the hit storage block in a latter storage area of the two adjacent storage areas to perform a data matching operation if it is determined that the hit storage block exists.

10. The apparatus according to claim 9, wherein the control circuit comprises:
at least two hit determining sub-circuits, corresponding to a storage area in the former storage block, and configured to determine whether a corresponding storage block is hit; and
a control generation sub-circuit, configured to, if the at least two hit determining sub-circuits determine that the corresponding storage block is hit, control a storage block corresponding to the hit storage block in the latter storage area to perform a data matching operation.

11. The apparatus according to claim 10, wherein the control generation sub-circuit comprises an OR gate and an AND gate, wherein the OR gate is configured to determine a priority of a storage block, and the AND gate is configured to receive data input from an input line of data to be searched for and an output from the OR gate, so as to control whether the received data is input to a storage block.
